(19) **Europäisches Patentamt**
**European Patent Office**
**Office européen des brevets**

(11) **EP 2 930 668 A1**

(12) **EUROPEAN PATENT APPLICATION**

(43) Date of publication:
**14.10.2015 Bulletin 2015/42**

(51) Int Cl.:
***G06Q 10/00*** *(2012.01)*

(21) Application number: **15165774.9**

(22) Date of filing: **09.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2009 EP 09425449**

(62) Document number(s) of the earlier application(s) in accordance with Art. 76 EPC:
**10785535.5 / 2 499 605**

(71) Applicant: **Contacta S.p.A.**
**10148 Torino (IT)**

(72) Inventor: **Fileccia, Andrea**
**10093 Collegno (Torino) (IT)**

(74) Representative: **Robba, Pierpaolo**
**Interpatent S.R.L.**
**Via Caboto 35**
**10129 Torino (IT)**

Remarks:
This application was filed on 29-04-2015 as a divisional application to the application mentioned under INID code 62.

(54) **SYSTEM AND METHOD FOR PLANNING WORK OF A COMPANY**

(57)     The present invention concerns a system for planning work of a company, including at least one server (12) arranged to manage corporate databases (21), a plurality of terminals or local processors (14) connected to the server (12), and planning modules (31) configured to plan the work of the company. The planning modules are stored in the server (12) or in the local processors (14) and are configured to plan the work of the company based at least on information about the time of shift beginning and the time of shift end of personnel operating in the company, on skills associated with the personnel operating in the company and on information concerning tasks the company has got and corresponding to the skills of the personnel. The invention also relates to a method of planning work of a company and to an information technology product arranged to carry out the method.

FIG. 1

EP 2 930 668 A1

**Description**

Technical field

The present invention generally relates to a system and a method for planning work of a company.
More particularly, the present invention relates to a system arranged to manage work planning in terms of personnel (human resources) commitment and commitment time in companies or corporate contexts known as "call centres", to which reference is preferably made in the present description.

Prior art

Systems and methods for planning work of a company are known in the art.
Generally, the prior art methods are directed to optimise human resources exploitation so as to obtain medium term optimum economic results.
Among the prior art methods, the planning method described in the book "An Introduction to Management Science", by David R. Anderson, Dennis J. Sweeney and Thomas A. Williams, is mentioned here.
The known method is based on linear programming mathematical tools, that is on tools that exploit only first degree mathematical expressions to solve complex corporate planning problems, and it is generally used for planning work in manufacturing companies in which, given a certain number of products, it is necessary to optimise the exploitation of personnel and statically predefined means in order to achieve a high economic yield.
The Applicant has realised that the known method, while exhibiting considerable mathematical simplicity, has serious limitations if the method needs to be implemented in corporate contexts where a high number of variables changing instant by instant is involved.
In particular, such limitations become clearly apparent in corporate contexts where, for instance:

- the number of tasks or product types is particularly large;
- the number of tasks is variable in time;
- the number and the kind of personnel that can be devoted to the tasks can be dynamically modified
- planning or devoting human resources to the tasks needs to be upgraded instant by instant.

Actually, in such contexts, herein referred to for the sake of simplicity as "high flexibility contexts", such as for instance the call centres, great problems are encountered in overcoming the intrinsic limitations of the prior art, unless a systematic revision of the mathematical methodology is carried out by taking into account the variables involved.
The more general technical problem lies in the difficulty on selecting the right instruments arranged to choose and devote human resources to tasks or jobs when number of type of products is very high and number of products for each type is changing instant by instant.
In synthesis, the Applicant has first of all realised that, while mathematical tools for work planning are known, they cannot be directly applied to particularly complex contexts unless a systematic revision of the mathematical tools themselves is carried out.
Moreover, the Applicant has realised that, further to a conceptual revision of the mathematical tools, in high flexibility corporate contexts the problem exists of integrating the planning tools with tools adapted to allow quickly modifying some of the variables involved and consequently optimising planning.

Description of the invention

It is an object of the present invention to overcome the technical problems set forth above.
This object is achieved by the system for planning work of a company, as claimed herein.
The present invention further concerns a method for planning work of a company, as well as an information technology product that can be loaded into the memory of at least one computer and comprises software code portions for carrying out the above method, when the product itself is executed on at least one computer. The reference to at least one computer is directed to highlight the possibility that the present invention is implemented in distributed manner on a plurality of computers.
The claims are integral part of the technical teaching provided herein in respect of the invention.
According to a feature of a preferred embodiment, the planning system includes planning modules configured so as to exploit information about working time and skills of personnel operating in the company, as well as information about tasks the company has got, in order to plan the work for unitary planning periods, by recursively modifying the working time of the personnel and by modifying instant by instant (each half hour for instance) type of products and number of products for each type managed instant by instant.

According to another feature of the present invention, the planning modules are associated with modules for detecting the work done by the personnel during unitary periods corresponding to the unitary planning periods or unitary human resources devoting periods to a task (each half hour for instance).

Moreover, Applicant has noted that the implementation of the method requires integration of planning tools with graphical tools.

As a matter of fact, effectiveness of the method can be only obtained by integrating planning computer program products with tools that, being graphical tools, are arranged to permit a very fast reaction to the evolution of type of products and of number of products for each type instant by instant.

According to another feature of present invention, the planning modules are configured to be executed in unitary periods, in order to recursively and automatically modify time of shift beginning and time of shift ending by assigning at least one unitary period or deducting at least one unitary period at the beginning or at the end of operator working hours.

Moreover, according to a further feature of the present invention, the planning modules are integrated with graphic representation modules configured to jointly show on a display or a screen curves representing the medium term planned work and curves representing the instant by instant work that is being actually performed.

Brief Description of the Figures

The above and other features and advantages of the present invention will become apparent from the following description of a preferred embodiment, made by way of non limiting example with the help of the accompanying Figures, in which elements denoted by a same or similar numerical reference denote components having the same or similar function and construction, and in which:

- Fig. 1 shows a block diagram of a system according to the invention;
- Fig. 2 is an example of a graph that can be obtained by using the system shown in Fig. 1.

Description of a Preferred Embodiment

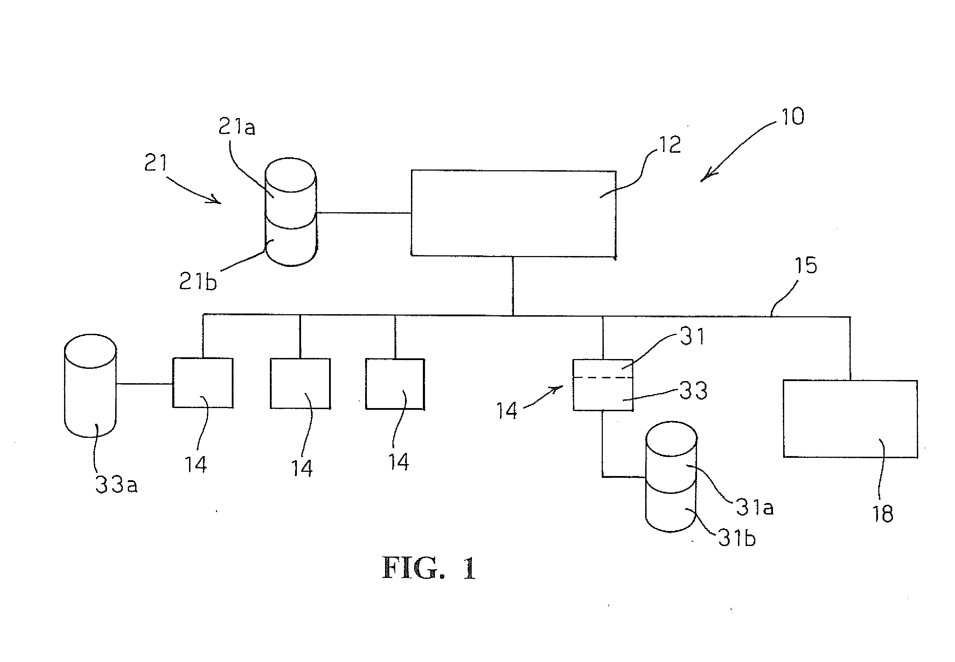

Referring to Fig. 1, a system 10 for planning work of a company is based, in the preferred embodiment, on an architecture including a server 12 configured to manage one or more corporate databases (DB's) 21, for instance relational databases, by means of management programs of known type, such as for instance SQL Server program or system by MICROSOFT.

In the present exemplary embodiment, the management program is arranged to manage at least a first DB 21 a containing information about the personnel operating in the company (operators) and a second DB 21b containing information about types of work or tasks the company has got.

System 10 further includes a plurality of terminals or personal computers (PC's) 14 connected to one another and to server 12 through a network 15, for instance a local area network of known type, and a switchboard 18, also connected to network 15.

Switchboard 18 is arranged to handle, in known manner, telephone calls incoming to PC's 14 and outgoing from PC's 14.

PC's 14 are preferably configured to gather information about the calls received and made as well as information about possible further work, such as e-mail or fax transmission etc. (back-office work), to display the above information and to calculate a final balance of such information.

In the preferred embodiment, one of PC's 14 or server 12 itself includes planning software modules 31 arranged to plan the work of the company, and display software modules 33 arranged to show on a display or screen the planned work as well as the actually performed work, as it will be described in detail later on.

System 10 with the above-described architecture allows a dynamic management of the planning of the work of the company.

To achieve such an objective in a high flexibility corporate context, a linear planning mathematical methodology has been considered in the present exemplary embodiment, by modifying the computation parameters thereof and by implementing such a methodology in system 10 with the planning modules, in the present exemplary embodiment linear planning software modules.

Moreover, display modules 33 have been integrated with the planning modules 31 in order to highlight the features of the results of the planning obtained, the actually performed work and deviations between planned work and actually performed work so as to permit a management and control of the company work instant by instant.

The reference parameters for the planning have been defined starting from a number of basic assumptions, which surprisingly have been proved happy.

In other words the assumptions have been made by selecting few parameters among a plurality of parameters and by checking effectiveness of the selected parameters. Following this selection process the basic assumptions have been consolidated and applied to the method of present invention.

DEFINITIONS OR ASSUMPTIONS

First, as far as the information about the personnel contained in DB 21a is concerned, it has for instance been assumed that:

- one or more skills corresponding to respective tasks can be allotted to each member of the personnel;
- a priority or no priority can be allotted to each task;
- each person, depending on the kind of working time, can be engaged during a working day by taking into account flexibility rules, such as rules providing for an earlier going on duty or a belated going off duty, and such flexibility rules are subjected to priority rules that can be associated with each operator or kind of operator.

As far as the tasks contained in DB 21b are concerned, it has for instance been assumed that:

- each task can be translated into a number of pieces per hour (PieH);
- proceeds per hour (ProcH) can be defined as a function of the number of pieces per hour.

As far as planning is concerned, it has for instance been assumed that:

- it is useful to perform repeated planning steps in order to obtain a good planning that suitably takes into account the flexibility rules;
- it is useful that planning is performed by considering unitary periods of half an hour, and that each day is divided into 48 half-hour periods. Of course, in other embodiments, planning can be based on longer or shorter unitary periods, without thereby departing from the scope of the description and claims.

In particular, it seems important to clarify that the term planning as used in the present disclosure relates not only to medium term planning based on a forecast, but also to the actually performed work.

As a matter of fact, the method herein disclosed relates to the solution of the technical problem of adapting a medium term planned work (two days) to the actually performed work (each half hour).

OPERATION

In accordance with the preferred embodiment, it is envisaged that the reference parameters are first retrieved from the first and second DB's 21a and 21b, are stored in temporary DB's or tables 31a and 31b, respectively, and then are possibly updated by the planning modules themselves in repeated planning steps.

More particularly, it is envisaged that one or more of the following information items can be retrieved from the first DB (Operator database) 21a, containing for instance working time (Time Sheet), Team to which an operator belongs and hourly costs of each operator, and can be arranged and stored for instance in a temporary database (Operator table) 31a:

- List of operators that can be allocated, or operator table: i.e., the list of the operators that can be allocated in each half-hour period and the priority (USERPrior) with which they can be allocated.

For instance, the operator table is initially populated starting from the operators' Time Sheet and by selecting:

- the operators who, within the planning working time (including possible overtime) have a priority rule providing for a high priority, e.g. an operator or user priority (USERPrior) with a high conventional value, e.g. a conventional value 1000;
- the operators whose working time either ends in the half-hour preceding the planning working time or, in the alternative, begins in the half-hour following the planning working time and to whom half an hour additional working time or overtime can be assigned depending on the User Priority; such operators are assigned a user priority (USERPrior) depending on the type of overtime work that can be assigned and on the overall situation of the working hours of the individual operator, as it will be described in detail later on.

- List of skills (tasks) that can be allocated, or skill table: i.e. the list of the operators and of the skills associated with each operator, and the priority (SKLPrior) with which the operators can be allocated based on the skills.

For instance, the table of the skills that can be allocated is initially populated starting from the skills stored in operator DB 21a, by allotting priorities corresponding to the possibility or impossibility for the operator to be used for managing a certain task, so that:

- for all operators that, in the Time Sheet, have an on-duty half-hour that cannot be allocated to any task (this is possible in case of superintendents or team leaders or of operators attending training courses) a specific skill is entered, as shown for instance in Table 1 below:

TABLE 1

| Kind of hour in Time Sheet | Associated skill |
|---|---|
| FM | Training |
| TL | Team Leader |

- for all remaining operators, the enabled skills are entered as they are stored in DB 21 a, provided that either the operator is within the planning working time or, if the operator has been proposed for half-hour overtime, the rules of operator flexibility are met, as it will be described in detail later on.

Of course, in accordance with the present exemplary embodiment, the skills correspond to the tasks that are to be planned.

In accordance with the preferred embodiment, it is also envisaged that it is possible to retrieve from the second DB (task database) 21b, containing for instance the list of tasks of kinds of works that can be performed in the planning period and the associated proceeds, and to arrange and store for instance in a temporary database (task table) 31b, one or more information items such as:

- <u>List of tasks (types) that can be allocated, or task table</u>: i.e. the list of the tasks that are to be worked in each planning half-hour and the priority (TYPEPrior) with which they are to be worked.
  For instance, the task table is initially populated starting from task database 21b, by selecting all types for which, in the planning half-hour, at least one piece is to be produced based upon the sales by a sales operator.
  For each type or task, one or more of the following parameters are entered into the table:

  - the task priority (TYPEPrior), indicating the priority with which the task type will have to be managed;
  - a number of pieces per time unit (PieH). In accordance with the preferred embodiment, such a number of pieces is entered as:

    - number of pieces which are expected as the forecast in the planning half-hour (FRCPie);
    - number of pieces measured in the half-hours preceding the planning half-hour (ACTPie);
    - number of pieces sold in the planning half-hours (BCSPie);
    - a number of pieces, if greater than zero, corresponding to the pieces that are still to be made during a planning period (RESIDUALPie) following the current planning period.

In synthesis, the planning modules are configured to plan the work for the individual half-hours by taking into account at least:

- the operators being on-duty or potentially on-duty depending on flexibility rules;
- the tasks that have been sold and the skills of the operators associated with the tasks that have been sold;

and by storing the planning results, in several steps, for instance into temporary tables 31a and 31b, so that the data stored at each step in the temporary tables are used for performing further planning steps.

In order to better point out the flexibility rules, an example of how such rules can be managed in order to allot half-hours more (FL+) or half-hours less (FL-) to the operators and to allow an optimum planning will be disclosed hereinbelow.

The rules for allotting half-hours more (FL+) provide that, in a pre-processing step, the planning modules check, for instance among the information contained in DB 21a:

- the kind of employment contract of the operator (part-time, full-time, etc.);
- the number of hours of possible non-engagement accumulated by the operator within a given period;
- the number of overtime hours that can be attributed to the operator;

and that, subsequent to the check, the modules determine:

- priority values with which an operator can be allotted half-hours before or after the working time envisaged as normal operation time.

PRE PROCESSING

The rules for allotting half-hours less (FL-) provide that, in a pre-processing step, the planning modules check, for instance among the information contained in DB 21a:

- the kind of employment contract of the operator (part-time, full-time, etc.);
- the number of overtime hours accumulated by the operator within a given period;
- the number of training hours that can be attributed to the operator;

and that, subsequent to the check, the modules determine:

- priority values with which, for the operator, half-hours can be allotted for instance within the working time envisaged as training working time, or half-hours can be deducted from the working time envisaged as normal operation time.

The results of the pre-processing allow computing for instance the User Priority (USERPrior) reference parameter for each operator.

In accordance with more preferred embodiments, it is also envisaged that the priority rules and the corresponding priorities can be allotted according to a period of validity of the rule (for instance by means of fields of the kind "Valid from") or can be forced so that the planning modules do not take into account priority rules or the priorities as determined.

In synthesis, in accordance with the preferred embodiment, it is envisaged that the planning modules provide, as it will be disclosed in more detail later on, not only for allocating the resources, but also for modifying the on-duty periods of the Operators in accordance with the working time flexibility rules as contained in Operator DB 21a.

Generally, in accordance with the preferred embodiment, the flexibility rules are set so that the planning modules can assign additional working periods to the Operators in time bands adjacent to the actual working time of the operators themselves, that is the time bands immediately preceding the time of going on duty and immediately following the time of going off duty, and can assign training periods during the working time.

More particularly, the flexibility rules are set so that the whole of the ordinary working hours and the overtime hours cannot exceed predetermined values, for instance 10 hours a day.

In particular, for the operators selected for a possible overtime based upon the flexibility rules, a user or operator priority value (USERPrior) depending on the kind of flexibility rule applied and on the overtime accumulated during the day and the time band concerned by the computation performed by the planning modules is entered into operator table 31a at each step performed by the planning modules.

The pre-processing described above allows populating a predetermined number of tables or databases necessary for performing the planning with the actual planning modules.

PLANNING

More particularly, the actual planning modules are arranged to allocate the operators based on the production requirements, by optimising an objective function that, in the present exemplary embodiment, is the summation, for each valid operator - task pair, of values

$$\text{Max} \sum_{ij} [(\text{TYPEPrior}_j + \text{SKLPrior}_{ij} + \text{USERPrior}_i + \text{ProcH}_j - \text{Cos H}_i) * x_{ij}]$$

where

- TYPEPrior is the priority assigned to a task;
- SKLPrior is the priority assigned to each operator - task pair;
- USERPrior is the priority assigned to a given operator;
- ProcH are the hourly proceeds for a given task;
- CosH is the hourly cost of a given operator;
- i is the i-th operator in a population of n operators;
- j is the j-th task in a population of m tasks;
- x is the unknown quantity of the planning equation, aiming at maximising the economical results and representing the time a given operator i must work on a given task j.

As disclosed above, the values of TYPEPrior, SKLPrior and USERPrior are entered at least in the pre-processing phase into one or more temporary databases corresponding to the task table, the skill table and the operator table.

In accordance with the present exemplary embodiment, the planning modules operate, for each half-hour of the Time Sheet, by retrieving the information entered into the tables and by imposing, as it can be readily understood, that the planning result meets some constraints.

For instance, In accordance with the present exemplary embodiment, it is envisaged that the following constraints are imposed to the planning:

- operator constraints: $\sum_j x_j$ = TotHoursOperator_i
  Such a constraint indicates that, for each operator, the sum of the time devoted to each task on which the operator is allocated must be 30 minutes in each half-hour;
- task constraints: $\sum_i x_i * PieH_i \leq PieMax\_Type\_J$
  Such a constraint indicates that, for each task, in the half-hour being considered, the sum of the pieces made by all allocated operators must be lower than or equal to the number of expected pieces.
  Such a constraint may be imposed in different manner, depending on whether the number of pieces expected as forecast (FRCPie) in that half-hour or the number of pieces still to be made in the rest of the day, if the kind is configured as "RESIDUALPie", is taken as a reference.

The actual planning modules, based on the tables prepared during the pre-processing step, are capable of processing the gathered data and supplying planning results.

The results supplied by the planning modules will comprise, for each operator - task pair, durations or times that will have to be devoted to the task by the operator.

In accordance with the preferred embodiment, such durations or times, in particular their values, are stored in a planning result database or table (result table) along with the values of Day, Concerned Half-hour, Team to which the operator belongs, Proceeds, Costs and Pieces.

Preferably, some simplifications are then made in the results as obtained by the planning modules (raw results), such as for instance:

- allocated times shorter than 0.001 are eliminated;
- overtime hours allocated on tasks such as, for instance, the training tasks and having a value of at least 0.3 are eliminated;
- the hours of working time reduction having a value of at least 0.3 are set to 0.5;
- proceeds, if any, resulting from training tasks or working time reduction tasks are forced to 0.

The above simplifications have been made on the basis of an effort to obtain planning results in a very short time.
As a matter of fact, present invention wherein planning results need to be upgraded at each half hour following the collection of the actually performed work requires a very fast planning tool; i.e. an implementation of a linear mathematical tool as well as a very simplified number of parameters.

The data obtained with the planning modules at each processing step are used to prepare a new operator Time Sheet parallel to the official one stored in DB 21a. That new time sheet is stored for instance in operator table 31 a, where the results in terms of presence/absence for each half-hour, computed by the planning modules, are reported.

According to a feature of present invention the planning tool provides graphical software modules configured to graphically show, for instance on a display, the comparison between the Time Sheets contained in DB 21 a and DB 31a, respectively, for instance by marking the differences with a suitable colour.

In particular, graphical tools are provided for showing planning results based on the number of pieces expected as forecast and number of pieces actually managed.

Such a feature is very important because is both a technical result and an instrument for adjusting resources to be devoted to tasks.

As the skilled in the art can readily understand, such a graphic solution enables providing an immediate picture of which modifications to the time sheets are suggested by the planning modules (planner). In this manner the team leaders can decide, based on the results supplied by the planner, how to modify the operators' shifts.

The operation of the system as described is as follows.

At the moment of the decision to execute the planning modules, an execution control mask, which allows setting the main computation parameters, is displayed as a result of suitable commands of known type, for instance, on the display of a PC 14..

More particularly, one or more of the following parameters can be selected in the mask:

- Function Command: it allows possibly specifying a mathematical computation methodology different from the one that has been exemplified for the planning:

- Planning period: it allows setting the period, in terms of hours, days etc., in which planning is requested;
- Number of steps or turns: it allows setting, for each planning period, how many times planning is to be processed again. The number of steps allows recursively operating in assigning half-hours (FL+) or in deducting half-hours (FL-) to the operators. Preferably, in accordance with the present exemplary embodiment, the value of the number of steps or turns is in the range 3 to 5;
- Time interval: it allows setting the time band, for instance in half-hour steps, in which planning is to be performed.

Once the desired parameters have been set, the planning computation by means of planning modules 31 is started by operating a start key in the mask.

The first step is the execution of pre-processing operations with the creation of temporary tables, such as for instance the creation of a complete Time Sheet for all days included in the interval defined as "planning period" in the mask.

Once the pre-processing is over and the temporary tables have been consequently created, the actual planning is computed for each half-hour of each day in the time interval as specified in the mask.

Planning is then processed again by using a number of steps or turns as specified in the mask.

In accordance with the present exemplary embodiment, the value set for the number of steps to be performed is particularly advantageous for determining FL+ and FL-, i.e. the extra time (positive or negative) to be devoted to tasks.

Actually, as the skilled in the art can readily understand, since the individual half-hours are sequentially processed by the planner, and since the rules as provided for in the present exemplary embodiment impose that FL+ and FL- are allocated at the beginning and the end of the working time, without "gaps", should a day be planned through a single step, it would be possible to allocate, for each operator, only one half-hour FL- at the end of the working time and only one half-hour FL+ at the beginning of the working time (of course, such a problem does not arise in case of overtime allocated at the end of the working time and of time reduction allocated at the beginning of the working time). On the contrary, by repeating several times the computation and by taking into account the previous results by processing again the temporary tables generated at each step by the planner, it is possible to overcome such limitations.

Actually, every additional turn for the same day makes it possible to allot one half-hour FL+ more before the beginning of the shift and one half hour FL- less at the end of the shift to an operator.

For instance, if the number of turns is set to 3, an operator working from 9.30 to 15.30 can be set to FL- from 14.00 and can be allotted FL+ periods from 8.00.

Once the actual planning of one or more half-hours is over, independently of the number of turns, the result is stored into a result DB or table 33a as well as, preferably, into the first and second DB's 21a and 21b and temporary DB's 31a and 31b.

In particular, in accordance with the preferred embodiment, the result is for instance exploited in order to:

- update personnel DB 21a;
- update Time Sheet and task temporary tables 31a and 31b so that successive turns can take advantage of the previous processing, for instance, in particular, for updating the overall FL+ and FL- situation for each operator.

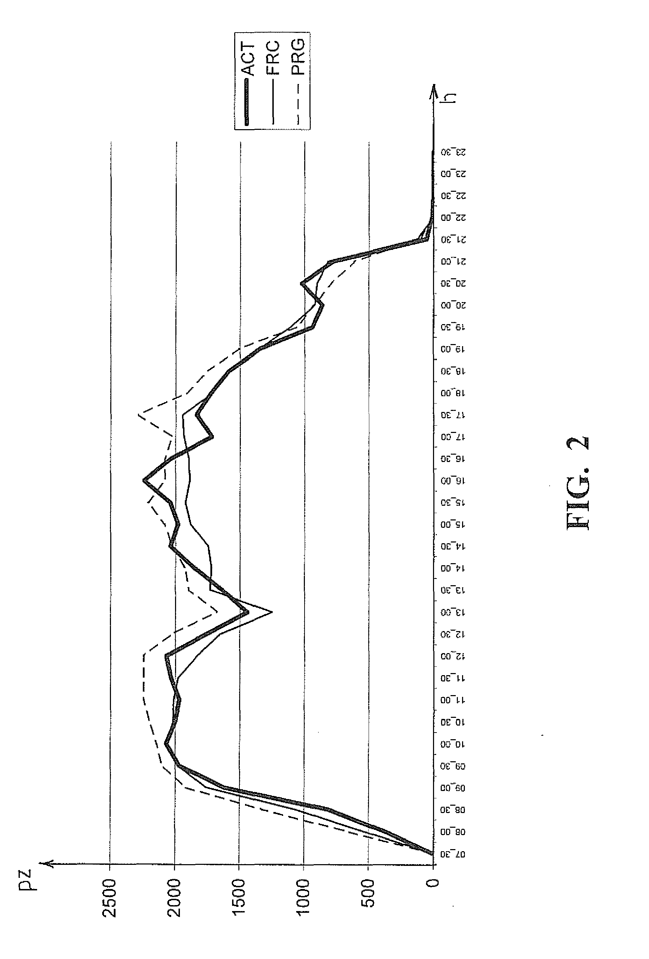

Still more particularly, in accordance with another feature of the present invention, at the end for instance of the processing of all turns in each day, the planning result is preferably stored into result DB 33a with indication "PRG" (Fig. 1, Fig. 2). In particular, the accumulated planning result in terms of Pieces, Proceeds and Hours, for instance grouped by Task and Team, is stored (Fig. 1, Fig. 2) with the details for each half-hour.

Storing the planning results ends the processing of the planning modules.

GRAPHICAL TOOLS

In accordance with a further aspect of the present invention, it is preferably envisaged that the "PRG" results are graphically compared with the available expected data, or forecast data ("FRC"), as shown for instance in Fig. 2.

More particularly, in the preferred embodiment, the planning results in terms of proceeds (PROC), pieces (PIE) and hours (HOURS), and the forecast data are stored in a single DB, for instance DB 33a, in order offsets, if any, between what has been planned and what has been forecast can be graphically displayed.

The graphic representation of the planning results and the forecast data by means of curves is a tool that is very useful to dynamically highlight and solve offsets, if any, between the curves.

Actually, in case of offsets, if any, between the curves, a Team Leader can for instance reallocate operators' working times and skills or try to agree, if possible, a different distribution of the work, for instance a work based on incoming and outgoing telephone calls, with one or more clients.

Still more preferably, it is also envisaged that, besides the forecast data, data corresponding to work actually performed within the planning intervals are also stored.

In accordance with another feature of a preferred embodiment, it is also envisaged that, at each working position, the different PC's 14 are equipped with software modules configured to automatically detect the work performed in time intervals corresponding to the planning and/or forecast intervals.

GRAPHICAL REPRESENTATION OF ACTUAL DATA

More particularly, at each position, software detection modules (ACT modules) are provided, which are arranged to calculate in real time a final balance of the work performed or produced by each operator in terms for instance of proceeds (PROC), PIECES (PIE) and hours (HOURS).

Still more particularly, it is envisaged that the ACT modules attribute to each task:

- the time devoted; and
- the kind of piece (PIE) produced, for instance incoming or outgoing telephone calls, training work, back office work, etc.

The ACT modules, in accordance with the preferred embodiment of the present invention, allow generating instant by instant, with the same periodicity as the planning modules, for instance every half-hour, data about the work carried out, which data are graphically shown in a curve, as shown for instance in Fig. 2.

Thus, it is possible to graphically show not only the planning and the forecast data, but also the data concerning the work actually carried out (balance data), and to obtain a synthetic real-time picture of the planning results, the forecast data and the balance data so as to allow dynamically solving possible criticalities associated with offsets between what has been planned, what has been forecast and what has been actually included in the final balance.

More particularly, in the preferred embodiment, it is envisaged that at least three graphs, possibly for the individual tasks, are graphically shown:

- graph of the proceeds;
- graph of the pieces; and
- graph of the hours accumulated;

and that each graph includes three curves respectively showing:

- forecast data, or "FRC" data curve: i.e. the work forecast for each task based upon the number of pieces, the proceeds per piece and the number of pieces per hour;
- planning results or "PRG" result curve: i.e. the results computed by the planner. Such results graphically show the better estimation of the real situation in terms of proceeds, pieces and hours. Offsets or differences, if any, between the "FRC" and the "PRG" curves allow detecting in advance the lack or the excess availability of resources, and consequently they allow intervening on the data inputted to the planning modules, for instance through interventions carried out by the team leader or the sales staff;
- final balance data or "ACT" data curve: i.e. the actual production data in terms of pieces, hours and proceeds. Such a curve allows an immediate graphic detection of the production criticalities, for instance, in case of call centres, low yield with respect to what has been forecast in terms of PieH for the individual operators, low number of incoming calls with respect to what has been forecast or planned (because of planning errors or technical failures of the clients' systems), low number of operators on duty because of absenteeism, etc.

In synthesis, the system as described not only allows dynamically planning work in high flexibility corporate contexts, but also graphically pointing out offsets between what has been planned, forecast and/or actually performed, so that offsets, if any, can be quickly obviated based on evaluations that can be immediately perceived, since they are visually shown for instance on a display.

Of course, obvious changes and modifications in respect of the components and the connections, as well as in respect of the details of the illustrated construction and the operating manner are possible without departing from the scope of the invention as set forth in the following claims.

**Claims**

1. A computer implemented system for planning work of a company, including

   - at least one server (12) arranged to manage corporate and temporary databases (21, 31a, 31b);
   - a plurality of terminals or local processors (14) connected to the server (12) through a network;

- a switch-board (18) connected to the network and arranged to handle telephone calls incoming to the terminals or outgoing from the terminals;
- planning modules (31) configured to plan the work of the company, said planning modules being stored and executed in said server (12) or in said local processors (14); said corporate databases (21) comprising stored therein:
- information concerning:

- working hours or official time sheets and time of shift beginning and shift end of a plurality of operators operating in the company;
- skills associated with the operators operating in the company;
- a plurality of type of tasks or tasks the company has got, said tasks corresponding to said skills of the operators;
- hourly proceeds (ProcH) for a given task and hourly costs (CosH) for a given operator;
- a first priority value (USRPrior) depending on the type of overtime work that can be assigned and on the overall situation of the working hours of the operator;
- a second priority value (SKLPrior) depending on the possibility or impossibility for the operator to be used for managing a certain type of task;
- a third priority value (TYPEPrior) indicating the priority with which the task type will have to be managed;

**characterised in that** said server (12) or local processors (14) are arranged to
- execute planning modules in unitary periods including

- a linear mathematical methodology for maximising

- an objective function that is arranged, by adding the first, second and third priority values to the hourly proceeds (ProcH) and subtracting the hourly costs (CosH), to calculate time values representing the time a given operator (i) must work on a given task (j), in order to maximise the objective function;

- graphic representation modules for

- providing a graphic representation, in said unitary periods, of said work
- as forecast on the basis of number of pieces which are expected,
- as actually performed on the basis of incoming and outgoing telephone calls handled by said switch-board, and
- as planned on the basis of the calculated objective function at the end of all turns of the planning modules,
in a single graph, obtaining a real-time picture of offsets between said forecast, said actually performed and said planned work;
- showing a comparison between the official time sheets stored in the corporate database (21a) and new time sheets stored in the temporary database (31a), said new time sheets being automatically suggested by said planning modules in order to quickly obviate said offsets calculated by said planning modules and represented by said graphic representation modules;

wherein a control mask on a display is provided for setting a number of turns for each unitary periods; and said planning modules are configured to be executed for said number of turns in each unitary period, in order to recursively and automatically modify said time of shift beginning and said time of shift end by assigning at least one unitary period (FL+) or deducting at least one unitary period (FL-) at the beginning or at the end of the working hours of the operators for each of said turns.

2. The system as claimed in claim 1, **characterised in that** said suggested new time sheets comprise automatic addition or deduction of said unitary periods of the working hours.

3. The system as claimed in claim 1 or 2, **characterised in that** said unitary periods are half-hour periods and said planning modules are configured to plan the work of the company for half-hours of working time.

4. The system as claimed in any of claims 1 to 3, **characterised in that** the number of turns is in the range 3 to 5.

5. The system as claimed in any of claims 1 to 4, **characterised in that** said graphic representation modules for showing a comparison between said official time sheets stored and said new time sheets are configured to mark difference between said official and new time sheets with a suitable colour.

6. A computer implemented method of planning work of a company, including the steps of:

- gathering, in corporate databases (21), information concerning:

- working hours or official time sheets and time of shift beginning and shift end of a plurality of operators operating in the company;
- skills associated with the operators operating in the company;
- a plurality of type of tasks or tasks the company has got, said tasks corresponding to said skills of the operators;
- hourly proceeds (ProcH) for a given task and hourly costs (CosH) for a given operator;
- a first priority value (USRPrior) depending on the type of overtime work that can be assigned and on the overall situation of the working hours of the operator;
- a second priority value (SKLPrior) depending on the possibility or impossibility for the operator to be used for managing a certain type of task;
- a third priority value (TYPEPrior) indicating the priority with which the task type will have to be managed;

- setting, by means of a control mask on a display, a unitary period and a number of turns for each unitary period;
- executing computerised planning modules including the steps of:

- calculating time values representing the time a given operator (i) must work on a given task (j), for each unitary period of the time sheet, by maximising an objective function that is arranged, by adding the first, second and third priority values to the hourly proceeds (ProcH) and subtracting the hourly costs (CosH), to calculate said time values;
- automatically preparing new operator time sheets for each operator on the basis of said time values calculated by maximising said objective function in said unitary periods;
- graphically showing, in a single graph, in said unitary periods, information concerning the work as forecast on the basis of number of pieces which are expected, as actually performed on the basis of incoming and outgoing telephone calls handled and as planned on the basis of said time values calculated by maximising said objective function at the end of all turns of the planning modules, thus obtaining a real-time picture of offsets between said forecast, said actually performed and said planned work; and
- graphically showing a comparison between said official time sheets and said new time sheets, thus providing an immediate picture of suggested modifications to the time sheets in order to quickly obviate said offsets;

wherein sais steps of calculating said time values by maximising said objective function and of preparing new operator time sheets are executed for said number of turns, in each unitary period, in order to recursively and automatically modify said time of shift beginning and said time of shift end by assigning at least one unitary period (FL+) or deducting at least one unitary period (FL-) at the beginning or at the end of the working hours of the operators for each said turns.

7. The method as claimed in claim 6, wherein said step of automatically preparing new operator time sheets includes the step of adding unitary periods to the time of shift beginning (FL+) or deducting unitary periods (FL-) from the time of shift end of the operators.

8. The method as claimed in claim 6 or 7, including the further step of calculating, for each of said unitary periods, a final balance of the work performed in the company in terms of proceeds, pieces and accumulated hours.

9. The method as claimed in any of claims 6 to 8, **characterised in that** said unitary periods are half-hour periods and said planning modules are configured to plan the work of the company for half-hours of working time.

10. The method as claimed in any of claims 6 to 9, **characterised in that** the number of turns is in the range 3 to 5.

11. The method as claimed in any of claims 6 to 10, wherein said step of graphically showing the comparison between said official time sheets and said new time sheets comprise the step of marking differences between said official and new time sheets with a suitable colour.

**12.** Computer program product or set of computer program products loadable in the memory of at least one computer and including software code portions arranged to perform, when the product is run on at least one computer, the method according to any one of claims 6 to 11.

**13.** The computer program product as claimed in claim 12, embodied in a computer readable medium.

**FIG. 1**

FIG. 2

EP 2 930 668 A1

Europäisches
Patentamt

European
Patent Office

Office européen
des brevets

## EUROPEAN SEARCH REPORT

Application Number

EP 15 16 5774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/012356 A1 (MCDUFF RICHARD [US] ET AL) 9 August 2001 (2001-08-09) * paragraphs [0005] - [0037] * ----- | 1-13 | INV. G06Q10/00 |
| X | US 6 263 049 B1 (KUHN RODNEY [US]) 17 July 2001 (2001-07-17) * column 4, lines 1-65 * ----- | 1-13 | |
| X | US 2005/033636 A1 (MIURA SHUHEI [JP] ET AL) 10 February 2005 (2005-02-10) * paragraphs [0011] - [0040] * ----- | 1-13 | |

TECHNICAL FIELDS
SEARCHED      (IPC)

G06Q

The present search report has been drawn up for all claims

| Place of search | Date of completion of the search | Examiner |
|---|---|---|
| Munich | 29 June 2015 | Falò, Luca |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

.......................................................................................

& : member of the same patent family, corresponding
     document

EPO FORM 1503 03.82 (P04C01)

**EP 2 930 668 A1**

## ANNEX TO THE EUROPEAN SEARCH REPORT
## ON EUROPEAN PATENT APPLICATION NO.

EP 15 16 5774

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2015

| Patent document cited in search report | | Publication date | Patent family member(s) | | Publication date |
|---|---|---|---|---|---|
| US 2001012356 | A1 | 09-08-2001 | AU US WO | 9663198 A 2001012356 A1 9917523 A1 | 23-04-1999 09-08-2001 08-04-1999 |
| US 6263049 | B1 | 17-07-2001 | US US | 6263049 B1 2001014143 A1 | 17-07-2001 16-08-2001 |
| US 2005033636 | A1 | 10-02-2005 | CN US WO | 1599911 A 2005033636 A1 03040977 A1 | 23-03-2005 10-02-2005 15-05-2003 |

EPO FORM P0459

For more details about this annex : see Official Journal of the European Patent Office, No. 12/82